# EUROPEAN PATENT SPECIFICATION

(11) **EP 3 999 682 B1**
(45) Date of publication and mention of the grant of the patent: **27.12.2023**
(21) Application number: 20739367.9
(22) Date of filing: 13.07.2020
(51) Int. Cl.: D21C 9/00, D21H 17/36

(54) **SURFACE MODIFIED CELLULOSE FIBER**
OBERFLÄCHENMODIFIZIERTE CELLULOSEFASER
FIBRE DE CELLULOSE MODIFIÉE EN SURFACE

(30) Priority: 17.07.2019 EP 19186844
(43) Date of publication of application: 25.05.2022
(73) Proprietor: SAPPI Netherlands Services B.V., 6211 AA Maastricht (NL)
(72) Inventor: BALLET, Wim, 3770 Riemst (BE)
(74) Representative: Schmitz, Joseph
(86) International application number: PCT/EP2020/069743
(87) International publication number: WO 2021/009114

(56) References cited:
- WO-A1-2004/033556
- WO-A1-2019/110868

## Description

### TECHNICAL FIELD

The present invention relates to process for producing surface modified bleached chemical pulp fiber in view of their incorporation into a variety of polymer matrices.

### PRIOR ART

In the field of polymer composites, in particular fiber reinforced composites the quality of dispersion of the fibers encapsulated in the polymer matrix is of paramount importance, since a better dispersion generally enables better mechanical properties when compared to the case where undispersed fibers clump together into inclusions also known as "flocks".

Some fibers and in particular plant-sourced fibers such as wood fibers are more demanding when compared to inorganic fibers such as glass fibers in the sense that they are not easily incorporated into a polymer matrix.

There exist multiples strategies seeking to afford better dispersion of the fibers such as plant-sourced fibers in the polymer matrix. For instance, higher shear forces may be used during the incorporation of the fiber into the polymer matrix, but this relatively straightforward measure on one hand leads to a process requiring considerable energy investment, which is undesirable in view of cost considerations and on the other hand will be detrimental to the quality of fibers which are then shortened due to the high shear. Another strategy is that of preparing feed granules via hot-cold mixers, where plant-sourced fibers are preliminarily combined with granules of polymer matrix in a first "hot" stage of the hot-cold mixer until the fibers essentially stick to the polymer pellets softening as a result of frictional heat and where the thus formed fiber/polymer clumps are dumped into the "cold" stage of the cold mixer where the are agitated to avoid the formation of larger clumps. The thus prepared fiber/polymer clumps can be introduced into an extruder in which the this mix of fiber and polymer matric is further mixed and blended to arrive at a satisfactory degree of dispersion. However, this strategy requires the use of special equipment such as the hot-cold mixer, which represents significant capital expenditure and requires precise control of the process.

Thus, there exist a need to provide a solution to the above dilemma in the production of the fiber reinforced composites, by which either the mixture of fibers and of polymer matrix is incorporated into the polymer matrix using potentially damaging shear forces and at high energetic cost or by which the mixture of fibers and of polymer matrix is manufactured into intermediate fiber/polymer clumps on non-conventional and expensive machinery prior to the production of the fiber reinforced composites.

### SUMMARY OF THE INVENTION

The above-mentioned problems are solved or alleviated by the process according to the present invention which provides for plant-based fibers that can be incorporated into polymer matrices without the need for exerting damaging shear forces on the mixture of plant-based fibers via energy-intensive treatment and without the need for complex formation of intermediate fiber/polymer clumps.

The plant-based fibers obtained by the process according to the invention allow easy incorporation thereof into a polymer matrix on conventional equipment at moderate shear forces.

It is an object of the present invention to provide a process for producing surface modified bleached chemical pulp fiber comprising fluidizing the bleached chemical pulp fiber and contacting the fluidized bleached chemical pulp fiber with an aerosol of a surface modifying composition comprising a surface modifying compound.

In the context of the present invention, the term "surface modified bleached chemical pulp fiber" refers to bleached chemical pulp fiber that has been modified by either the adhesion/adsorption of a surface modifying compound onto the bleached chemical pulp fiber or by the chemical bond formation between the surface modifying compound and the bleached chemical pulp fiber.

In the process for producing surface modified bleached chemical pulp fiber according to the present invention, the fluidized bleached chemical pulp fiber is contacted with an aerosol such that the surface modifying composition comprising a surface modifying compound can deposit on the bleached chemical pulp fiber upon collision of the fluidized bleached chemical pulp fiber with an aerosol droplet/liquid particle of the surface modifying composition.

The fluidized bleached chemical pulp fiber may be contacted with an aerosol in a suitable device capable of fluidizing the bleached chemical pulp fiber and of providing an aerosol of surface modifying composition comprising a surface modifying compound. Suitable devices may be for example devices equipped with a mixing cavity featuring a rotary mixing means that can form a vortex of bleached chemical pulp fiber and which are further equipped with a spray nozzle capable of generating and delivering an aerosol into the mixing cavity. Other suitable devices may be fluid bed reactors in which the bleached chemical pulp fiber is fluidized by a flow of,preferably heated, air that may comprise the aerosol of a surface modifying composition comprising a surface modifying compound, or the aerosol may also be sprayed on separately, preferably without using additional mechanical mixing means.

The amount of surface modifying compound that is ultimately deposited onto the surface modified bleached chemical pulp fiber can be influenced by for example controlling the time during which the fluidized bleached chemical pulp fiber is contacted with an aerosol, or for example by controlling the size of the droplets in the aerosol or for example by controlling the amount of surface modifying compound comprised in the a surface modifying composition, other parameters can be nozzle, size flow rate, or the pressure of the liquid and the blowing air .

The surface modifying composition may comprise one or more surface modifying compounds, which may or may not be capable of a chemical reaction with the cellulose molecules of the bleached chemical pulp fiber under the conditions experienced during the surface modification of the bleached chemical pulp fiber. In one embodiment, the surface modifying composition aerosol is applied at atmospheric pressure and at room temperature, i.e at roughly 1 atm and 25°C.In the case where a silane is used in the surface modifying composition, the temperature may be increased up to 120°C or higher, with the proviso of not thermally degrading the bleached chemical pulp fiber, in order to facilitate the adhesion of silane-type surface modifying compounds via hydrolysis.

In the case where the one or more surface modifying compound is not capable of a chemical reaction with the cellulose molecules of the bleached chemical pulp fiber during the surface modification of the bleached chemical pulp fiber, the applied one or more surface modifying compounds may be heat activated when the thermoplastic polymer in a melt is mixed with surface modified bleached chemical pulp fiber such as to chemically react with the cellulose molecules of the bleached chemical pulp fibers via formation of a chemical bond between the surface modifying compound and the cellulose molecules of the bleached chemical pulp fibers.

Exemplary surface modifying compounds which undergo heat activation are coupling agents based on one or more dicarboxylic alkenoic acid anhydrides. Such coupling agents are generally available as grafted polyolefins such as MAPP or MAPE.

In the case where the one or more surface modifying compound is capable of a chemical reaction with the cellulose molecules of the bleached chemical pulp fiber during the surface modification of the bleached chemical pulp fiber, the applied one or more surface modifying compound may be water activated when the bleached chemical pulp fiber is contacted with the one or more surface modifying compound such as to chemically react with the cellulose molecules of the bleached chemical pulp fibers via formation of a chemical bond between the surface modifying compound and the cellulose molecules of the bleached chemical pulp fibers.

Exemplary surface modifying compounds which undergo water activation are coupling agents based on one or more silanes preferably having one or more, more preferably two or three, hydrolysable substituent groups such as alkoxy groups (-OR) or halogens which can react in the presence of water to then graft onto the cellulose molecule. Exemplary silanes that may be used are triethoxy octylsilane, triethoxy isobutylsilane, triethoxy propylsilane, or potassium methyl siliconate.

The bleached chemical pulp fiber may be sourced from a variety of chemical pulping processes including, but not limited to Kraft, sulphite or sulphate pulping. Correspondingly, the bleached chemical pulp fiber may be bleached Kraft pulp fiber, bleached sulphite pulp fiber or bleached suphate pulp fiber. In a preferred embodiment, the bleached chemical pulp fiber may be bleached dissolving pulp and in particular may be an unrefined bleached chemical pulp fiber.

In the context of the present invention, the bleached chemical pulp fiber may be in the form of individual fibers, which can be obtained by milling pulp sheets of bleached chemical pulp fiber in for example a knife mill. If the bleached chemical pulp fiber is in the form of individual fibers, the entire surface of the fibers is accessible to and can be treated with the aerosol, which would otherwise not be possible if the bleached chemical pulp fiber was present as agglomerates of individual fibers. The individual bleached chemical pulp fibers may preferably have a moisture content of about 5 to 10 weight%, more preferably of about 7, 8 or 9 weight%, which is a moisture content that allows surface modifying compounds to more easily react with the constituent cellulose molecules of the individual bleached chemical pulp fibers.

Advantageously, the fiber length of the fibers of bleached chemical pulp fiber is controlled, such as for example by passing the milled pulp sheets through a mesh screen of 200 µm.

In a preferred embodiment, the bleached chemical pulp fiber may be made by chemically pulping and bleaching wood such as hardwood or softwood, or the bleached chemical pulp fiber may be made from plants such as hemp, rice straw, kenaf, jute, linen, coconut, banana, or sisal.

In a preferred embodiment of the process for producing surface modified bleached chemical pulp fiber according to the present invention, the aerosol comprises liquid particles of surface modifying composition, preferably having an average diameter of from 1 to 450 µm.

In a preferred embodiment of the process for producing surface modified bleached chemical pulp fiber according to the present invention, wherein the surface modifying composition comprises a dicarboxylic alkenoic anhydride grafted polyolefin as the surface modifying compound, such as maleic anhydride-grafted polypropylene (MAPP) or maleic anhydride-grafted polyethylene (MAPE).

In a preferred embodiment of the process for producing surface modified bleached chemical pulp fiber according to the present invention, the surface modifying composition is an aqueous, and preferably non-ionic, dispersion of the dicarboxylic alkenoic acid anhydride grafted polyolefin, preferably comprising of from 1 to 2 weight% of the dicarboxylic alkenoic acid anhydride grafted polyolefin.

In a preferred embodiment of the process for producing surface modified bleached chemical pulp fiber according to the present invention, the surface modifying composition comprises or consists of a silane (pure or in ethanol) according to formula I

(R₁)ₙSi (R₂)₄₋ₙ, (I)

as the surface modifying compound, where R₁ is a group capable of undergoing hydrolysis such as a C₁-C₁₀ alkoxy, -OH or a halogen, where n is a integer chosen from 1, 2 or 3, where R₂ can be independently a hydrogen, methyl, ethyl or a branched or linear alkyl or alkenyl chain having preferably 3 to 12 carbons and which may optionally be substituted; or a salt of a silane according to formula I, preferably a metal salt of a silane according to formula I. Exemplary branched or linear alkyl or alkenyl chain having preferably 3 to 12 carbons are methyl, ethyl, n- or iso-propyl, n-butyl or tert-butyl, pentyl, hexyl, heptyl, octyl,nonyl, decyl, undecyl, dodecyl, or vinyl, butenyl or propenyl and so on.

In a preferred embodiment of the process for producing surface modified bleached chemical pulp fiber according to the present invention, the surface modifying composition comprises or consists of a silane according to formula I as the surface modifying compound, where R₁ is C₁-C₁₀ alkoxy, where n is a integer chosen from 2 or 3, where R₂ can be independently a methyl, ethyl or a branched or linear alkyl chain having preferably 3 to 12 carbons. Exemplary C₁-C₁₀ alkoxy moieties which can be used are methoxy, ethoxy, n- or iso - propoxy and tert-butoxy and so on.

In a preferred embodiment of the process for producing surface modified bleached chemical pulp fiber according to the present invention, the surface modifying composition is a solution of one or more silanes according to formula I in an alcohol such as methanol or ethanol or an aqueous solution of a salt of one or more silane according to formula I, preferably an aqueous solution of a metal salt thereof and more preferably a alkali metal salt thereof. An exemplary salt are sodium or potassium methyl siloxane. Exemplary silanes according to formula I are aminopropylsilane, triethoxy octylsilane, propylsilane or isobutylsilane.

In a more preferred embodiment of the process for producing surface modified bleached chemical pulp fiber according to the present invention, the surface modifying composition comprises or consists of a silane (pure or in ethanol) according to formula I

(R₁)ₙSi (R₂)₄₋ₙ, (I)

as the surface modifying compound, where R₁ is -OH, where n is a integer chosen from 2 or 3, where R₂ is a branched or linear alkyl chain having preferably 3 to 4 carbons and which may optionally be substituted with an amino group such as for example when R₂ is propyl, isobutyl or aminopropyl.

In the case where the surface modifying composition is a solution of one or more silanes according to formula I in an alcohol, it is preferred to provide a certain water content in said solution. Advantageously, the solution of one or more silanes according to formula I in an alcohol has a water content of 5 weight %, or from 1 weight% to 9 weight%. In the case the surface modifying composition is a solution of one or more silanes according to formula I in an alcohol including water, the water is preferably adjusted to an acidic pH, preferably of from 4 to 5.

In a preferred embodiment of the process for producing surface modified bleached chemical pulp fiber according to the present invention where the surface modifying composition is a solution of one or more silanes according to formula I in an alcohol or an aqueous solution of a salt of one or more silanes according to formula I, the surface modifying composition may comprise of from 0.1 to 50 wt%, more preferably 10 to 40 wt%of the silane or salt thereof according to formula I.

In a preferred embodiment of the process for producing surface modified bleached chemical pulp fiber according to the present invention and in the case one or more silanes having according to formula I are used, and in particular in the case the surface modifying compositon essentially consists of the surface modifying compound, the process may further include maintaining the water or moisture content of the bleached chemical pulp fiber within a range of about 5 to 10 weight%, more preferably of about 7, 8 or 9 weight%, while contacting the fluidized bleached chemical pulp fiber with an aerosol of a surface modifying composition comprising a surface modifying compound.

In a preferred embodiment of the process for producing surface modified bleached chemical pulp fiber according to the present invention and in the case one or more silanes having according to formula I are used, and the surface modifying composition is a solution of one or more silanes according to formula I in an alcohol, the alcohol may be dry alcohol or may more advantageously be an alcohol having a water content of 5 weight %, or from 1 weight% to 9 weight%..

In a preferred embodiment of the process for producing surface modified bleached chemical pulp fiber according to the present invention, the bleached chemical pulp fiber is modified with an amount of 0.1 to 10 wt% of surface modifying compound with respect to the weight of the bleached chemical pulp fiber. In particular, in the case the surface modifying compound comprises a silane, an amount of 1 to 5 wt% or 1 to 2 wt% of surface modifying compound with respect to the weight of the bleached chemical pulp fiber has been found to be advantageous, whereas in the case the surface modifying compound comprises a dicarboxylic alkenoic anhydride grafted polyolefin such as MAPP or MAPE, an amount of 2 to 10 wt% or about 4 to 5% of surface modifying compound with respect to the weight of the bleached chemical pulp fiber has been found to be advantageous.

In a preferred embodiment of the process for producing surface modified bleached chemical pulp fiber according to the present invention, the bleached chemical pulp fiber is fluidized in in a fluidized bed reactor.

In the case where the bleached chemical pulp fiber is fluidized in a fluidized bed, the fluidization may be achieved by passing the aerosol of surface modifying composition through the bleached chemical pulp fiber or may be achieved by passing a separate fluidization gas through the bleached chemical pulp fiber and spraying the aerosol of surface modifying composition onto the bleached chemical pulp fiber. In the latter case, the aerosol of surface modifying composition may be sprayed onto the bleached chemical pulp fiber either in essentially the same direction as the fluidization gas or in a different direction. In a preferred embodiment the aerosol of surface modifying composition may be sprayed onto the bleached chemical pulp fiber in essentially an opposite same direction as the fluidization gas, e.g. the aerosol of surface modifying composition is sprayed onto the bleached chemical pulp fiber in essentially a downward vertical direction whereas the fluidization gas is passed through the bleached chemical pulp fiber in essentially upward vertical direction.

In a preferred embodiment of the process for producing surface modified bleached chemical pulp fiber according to the present invention, the bleached chemical pulp fiber is fluidized in a mixing device, in particular by vibration or mechanical agitation of the bleached chemical pulp fiber. Exemplary mixing devices in which this fluidization can be achieved in a mixing device comprising at least a mixing cavity and a mixing means. The mixing means are capable of entraining the bleached chemical pulp fiber into a vortex or a device comprising at least a mixing cavity and a vibration means allowing for the formation of a vibratory fluidized bed. In both cases, the mixing cavity can be provided with an aerosol which may be generated in situ by for example an atomization nozzle or which may be fed into the mixing cavity from an aerosol source outside the mixing cavity.

Exemplary mixing means capable of entraining the bleached chemical pulp fiber into a vortex are stirrers, tumblers, paddles, impellers, blades, etc.

The surface modified bleached chemical pulp fiber may be used in a process for producing an agglomerate material comprising or essentially consisting of surface modified bleached chemical pulp fiber, comprising producing a surface modified bleached chemical pulp fiber according to any of the above, wetting the surface modified bleached chemical pulp fiber with a binder liquid, which may also be water, and agglomerating the wet surface modified bleached chemical pulp fiber into an agglomerate comprising or essentially consisting of surface modified bleached chemical pulp fiber, said agglomerates preferably having a bulk density of more than 50 g/dm³ , or more than 80 g/dm³ or more than 190 g/dm³. The binder liquid may further comprise an aqueous solution of a binder polymer such as for example PVOH.

Agglomerating the wet surface modified bleached chemical pulp fiber may be achieved in a suitable agglomeration device, such as for example tumble dryers, paddle mixers, hot mixers, pin mixers, fluidized bed systems, high impact vertical mixers (e.g. Hosokawa flexomix), and is preferably carried out in a high impact vertical mixer.

In the process for producing an agglomerate material comprising or essentially consisting of surface modified bleached chemical pulp fiber according to the present invention, the binder liquid is water and/or the agglomerate material comprising or essentially consisting of surface modified bleached chemical pulp fiber is preferably dried to a water content of no more than 5 wt%, no more than 2 wt%.

In the process for producing an agglomerate material comprising or essentially consisting of surface modified bleached chemical pulp fiber according to the present invention, the agglomerate material comprising or essentially consisting of surface modified bleached chemical pulp fiber is essentially free of thermoplastic polymer other than the surface modifying compound such as MAPP or MAPE and/or a binder polymer, in particular is essentially free of a non-grafted thermoplastic polyolefin such as polypropylene or polyethylene.

The surface modified bleached chemical pulp fiber may be used in a process for producing a polymer composite material, comprising mixing a thermoplastic polymer in a melt with surface modified bleached chemical pulp fiber produced according above, where the surface modified bleached chemical pulp fiber is preferably in the form of agglomerate material comprising or essentially consisting of surface modified bleached chemical pulp fiber produced according above, wherein the thermoplastic polymer is preferably a thermoplastic polyolefin such as polypropylene or polyethylene.

In the process for producing a polymer composite material according to the present invention, mixing a thermoplastic polymer in a melt with surface modified bleached chemical pulp fiber is carried out in an extruder.

The surface modified bleached chemical pulp fiber, which when compared to the bleached chemical pulp fiber that has not been surface modified, requires at least 10%, at least 20%, at least 30%, at least 40%, at least 50% or at least 60% less energy to disperse in a thermoplastic polymer matrix, preferably via extrusion of the polymer matrix and the fiber, and optionally in the presence of an additional coupling agent. In particular, the surface modified bleached chemical pulp fiber is obtained according to the process for producing surface modified bleached chemical pulp fiber of the present invention.

The surface modified bleached chemical pulp fiber, requires a specific energy of less than 0.2 kWh/kg, preferably less than 0.150 kWh/kg and more preferably less than 0.125 kWh/kg to disperse in a thermoplastic polymer matrix such as a polyolefin, preferably via extrusion of the polymer matrix and the fiber, and optionally in the presence of an additional coupling agent. In particular, the surface modified bleached chemical pulp fiber is obtained according to the process for producing surface modified bleached chemical pulp fiber of the present invention.

The surface modified bleached chemical pulp fiber produced according to the present invention may be used in an agglomerate materil comprising or essentially consisting of comprising surface modified bleached chemical pulp fiber produced according to the present invention.

The surface modified bleached chemical pulp fiber produced according to the present invention may be used in a process for producing a polymer composite material, comprising mixing a thermoplastic polymer in a melt with surface modified bleached chemical pulp fiber produced according to the present invention or agglomerate material produced according to the present invention, wherein the thermoplastic polymer is preferably a thermoplastic polyolefin such as polypropylene or polyethylene, and/or the amount of thermoplastic polymer comprised in the polymer composite material is of from 30 to 99 weight percent and/or the amount of surface modified bleached chemical pulp fiber comprised in the polymer composite material is of from 1 to 70 weight percent, based on the total weight of the polymer composite material.

In the polymer composite material, the amount of thermoplastic polymer is of from 60 to 90 weight percent and/or the amount of surface modified bleached chemical pulp fiber comprised in the polymer composite material is of from 10 to 40 weight percent, based on the total weight of the polymer composite material.

The polymer composite material, preferably in pellet form, may be obtained by mixing a thermoplastic polymer in a melt with surface modified bleached chemical pulp fiber or agglomerate material according to the present invention, where the surface modified bleached chemical pulp fiber is preferably in the form of agglomerate material comprising or essentially consisting of surface modified bleached chemical pulp fiber produced according to the present invention.

In the polymer composite material, the modified bleached chemical pulp fiber requires a specific energy of less than 0.2 kWh/kg, preferably less than 0.150 kWh/kg and more preferably less than 0.125 kWh/kg to disperse in the thermoplastic polymer matrix such as a polyolefin, preferably via extrusion of the polymer matrix and the fiber, and optionally in the presence of an additional coupling agent such as a dicarboxylic alkenoic anhydride grafted polyolefin. In particular, the surface modified bleached chemical pulp fiber is obtained according to the process for producing surface modified bleached chemical pulp fiber of the present invention.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

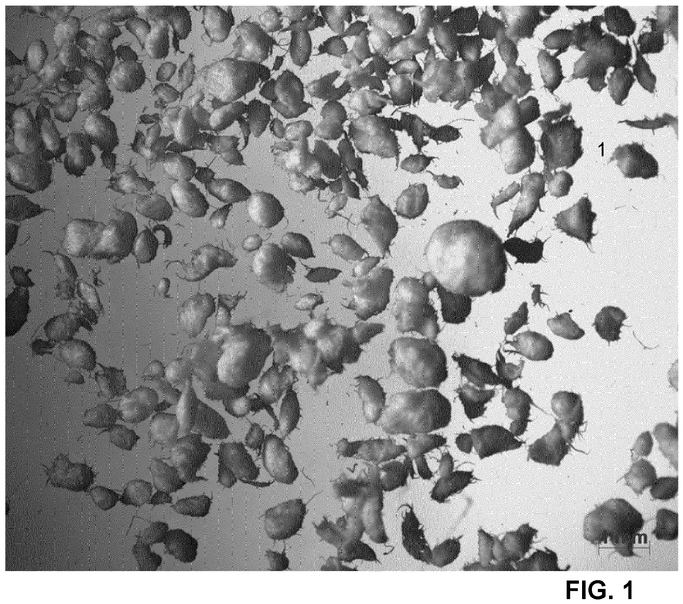

- Fig. 1: shows agglomerate material essentially consisting of surface modified bleached chemical pulp fibre.

### DESCRIPTION OF PREFERRED EMBODIMENTS

### Surface modification of bleached chemical pulp fiber

Surface modified bleached chemical pulp fiber was produced by fluidizing bleached chemical pulp fiber in a heated laboratory stirrer device equipped with a double stirrer blade equipped with side tip scrapers. The top lid was provided with a hole from where the aerosol of triethoxy(octyl)silane could be applied onto the fluidized bleached chemical pulp fiber. The aerosol of surface modifying composition of triethoxyoctylsilane was delivered while the stirrer device was operated at 100 rpm until an amount corresponding to approx. 2 wt%, with respect to the bleached chemical pulp fiber weight was applied. After the surface modifying composition of triethoxyoctylsilane has been delivered, the stirrer device was operated further at 200 rpm to homogenize for 15 minutes at room temperature and then reduced to 100 rpm and the temperature is increased to atemperature of approximately 95°C. The speed and temperature were maintained for another 20 minutes to cure the triethoxyoctylsilane to the fibres. After cooling back to room temperature, the surface modified bleached chemical pulp fiber was recuperated.

The surface modified bleached chemical pulp fiber were then agglomerated in a household blender. The fibres were wetted with approximately 150 parts per hundred fiber (phf) of water while operating the blender until they started to agglomerate. The agglomerate material was then collected and dried in an oven at 80°C for several hours until dry. The agglomerate material is shown in Figure 1.

The aggregate material of surface modified bleached chemical pulp fiber was the used in extrusion trials aimed at determining the specific energy needed to disperse the surface modified bleached chemical pulp fibers in a polyolefin matrix.

In the case of bleached chemical pulp fiber that were not surface modified and used as comparative, the agglomerate material was obtained according to the same procedure described above with the exception that the formation of agglomerates needed more water, i.e. approximately 200 parts per hundred fiber (phf) of water.

### Comparative

40 parts of bleached chemical wood pulp fiber obtained by grinding corresponding pulp sheets in a knife mill and screened over 200 µm mesh in the form of agglomerated material, 57 parts of homopolymer PP having a MFI of 47 when measured at 230°C using a 2,16 kg load, and 3 parts MAPP coupling agent were combined into a polymer composite on a Coperion ZSK26 Mc18 co-rotating twin screw extruder equipped with screws of 25 mm in diameter and having a LID ratio of 44.

The extruder contained 11 barrel unit sections on which the main hopper was located on section 1, a first side-feeding unit was provided at section 4, a second side-feeding unit was provided at section 7. The screws comprised several kneading sections: 3 kneading zones between section 4 and 7 and 4 kneading zones between section 7 and 11.

The minimal specific energy needed to obtain a polymer composite in which no flock could be identified via visual inspection was determined as being 0,240 kWh/kg when the bleached chemical wood pulp fiber was dosed via the first side-feeding unit at section 4with at a screw rotation speed of 400 rpm at a total throughput was 15 kg/h . When lesser specific energy was used, by for example reducing the screw speed or feeding the fiber more downstream a suboptimal dispersion of the fibers and visible flocks within the polymer composite was observed.

### Polymer composite

A polymer composite was obtained according to the same protocol as above, with the exception that the fiber was surface modified bleached chemical wood pulp fiber obtained according to the above described embodiment of the present invention.

The minimal specific energy needed to obtain a polymer composite in which no flock could be identified via visual inspection was determined as being 0,115 kWh/kg when the bleached chemical wood pulp fiber was dosed via the second side-feeding unit at section 7 (i.e. bypassing kneading zones between section 4 and 7) with at a screw rotation speed of 120 rpm at a total throughput was 15 kg/h.

Thus, the surface modified bleached chemical pulp fiber allows to incorporate bleached chemical pulp fiber into a polymer matrix at the same dispersion level but using about 50% less energy when compared to the bleached chemical pulp fiber that has not been surface treated.

## Claims

1. A process for producing surface modified bleached chemical pulp fiber comprising fluidizing a bleached chemical pulp fiber and contacting the fluidized bleached chemical pulp fiber with an aerosol of a surface modifying composition comprising a surface modifying compound.

2. The process for producing surface modified bleached chemical pulp fiber according to claim 1, wherein the aerosol comprises liquid particles of surface modifying composition preferably having an average diameter of from 1 to 450 µm.

3. The process for producing surface modified bleached chemical pulp fiber according to claim 1 or 2, wherein the bleached chemical pulp fiber is modified with an amount of 0.1-10 wt% of surface modifying compound with respect to the weight of the bleached chemical pulp fiber.

4. The process for producing surface modified bleached chemical pulp fiber according to claim 1 to 3, wherein the surface modifying composition comprises a dicarboxylic alkenoic anhydride grafted polyolefin as the surface modifying compound, such as maleic anhydride-grafted polypropylene (MAPP) or maleic anhydride-grafted polyethylene (MAPE).

5. The process for producing surface modified bleached chemical pulp fiber according to claim 4, wherein the surface modifying composition is an aqueous, and preferably non-ionic, dispersion of the dicarboxylic alkenoic acid anhydride grafted polyolefin, preferably comprising of from 5 to 10 wt% of the dicarboxylic alkenoic acid anhydride grafted polyolefin.

6. The process for producing surface modified bleached chemical pulp fiber according to claim 1 to 3, wherein the surface modifying composition comprises, or consists of, a silane according to formula I (R₁)ₙSi (R₂)₄₋ₙ, as the surface modifying compound, where R₁ is a group capable of undergoing hydrolysis such as a C₁-C₁₀ alkoxy, -OH or a halogen, where n is a integer chosen from 1, 2 or 3, where R₂ can be independently a hydrogen, methyl, ethyl or a branched or linear alkyl or alkenyl chain having preferably 3 to 10 carbons which may or may not be substituted; or wherein the surface modifying composition comprises, or consists of, a salt of a silane according to formula I (R₁)ₙSi (R₂)₄₋ₙ, as the surface modifying compound.

7. The process for producing surface modified bleached chemical pulp fiber according to claim 6, wherein the surface modifying composition is a solution of a silane according to formula I in an alcohol such as methanol or ethanol; or an aqueous solution of a salt of a silane according to formula I, preferably an aqueous solution of a metal salt thereof.

8. The process for producing surface modified bleached chemical pulp fiber according to claim 6 or 7, wherein the surface modifying composition comprises of from 2 to 50 wt%, and preferably of from 20 to 30 wt%, of the silane according to formula I.

9. The process for producing surface modified bleached chemical pulp fiber according to any preceding claim, wherein the bleached chemical pulp fiber is fluidized in a fluidized bed reactor.

10. The process for producing surface modified bleached chemical pulp fiber according to any preceding claim, wherein the bleached chemical pulp fiber is fluidized in a mixing device.

11. The process for producing surface modified bleached chemical pulp fiber according to any preceding claim, wherein the surface modified bleached chemical pulp fiber is dried to a water content of no more than of about 5 wt%.

12. A process for producing an agglomerate material comprising or essentially consisting of surface modified bleached chemical pulp fiber, comprising producing a surface modified bleached chemical pulp fiber according to any of the preceding claims, wetting the surface modified bleached chemical pulp fiber with a binder liquid, and agglomerating the wet surface modified bleached chemical pulp fiber into an agglomerate comprising or essentially consisting of surface modified bleached chemical pulp fiber, said agglomerates preferably having a bulk density of more than 80 g/dm³.

13. The process for producing an agglomerate material according to claim 12 comprising or essentially consisting of surface modified bleached chemical pulp fiber, where the binder liquid is water and /or wherein the agglomerate material comprising or essentially consisting of surface modified bleached chemical pulp fiber is dried to a water content of no more than 5 wt%.

14. The process for producing an agglomerate material according to claim 12 or 13 comprising or essentially consisting of surface modified bleached chemical pulp fiber, where the agglomerate material comprising or essentially consisting of surface modified bleached chemical pulp fiber is essentially free of thermoplastic polymer, in particular essentially free of non-grafted thermoplastic polyolefin such as polypropylene or polyethylene.

## Patentansprüche

1. Verfahren zum Herstellen von oberflächenmodifizierter gebleichter chemischer Pulpfaser, beinhaltend ein Verflüssigen einer gebleichten chemischen Pulpfaser und ein Kontaktieren der verflüssigten gebleichten chemischen Pulpfaser mit einem Aerosol einer oberflächenmodifizierenden Zusammensetzung, welche eine oberflächenmodifizierende Verbindung aufweist.

2. Verfahren zum Herstellen von oberflächenmodifizierter gebleichter chemischer Pulpfaser gemäss Anspruch 1, wobei das Aerosol Flüssigkeitspartikel einer oberflächenmodifizierenden Zusammensetzung aufweist, welche vorzugsweise einen durchschnittlichen Durchmesser von 1 bis 450 µm aufweisen.

3. Verfahren zum Herstellen von oberflächenmodifizierter gebleichter chemischer Pulpfaser gemäss Anspruch 1 oder 2, wobei die gebleichte chemische Pulpfaser mit einer Menge von 0.1-10 Gewichtsprozent der oberflächenmodifizierenden Verbindung, in Bezug auf das Gewicht der gebleichten chemischen Pulpfaser, modifiziert wird.

4. Verfahren zum Herstellen von oberflächenmodifizierter gebleichter chemischer Pulpfaser gemäss einem der Ansprüche 1 bis 3, wobei die oberflächenmodifizierende Zusammensetzung als die oberflächenmodifizierende Verbindung ein mit einem Dicarbon-Alkensäure-Anhydrid aufpolymersiertes Polyolefin aufweist, wie beispielsweise mit Maleinsäureanhydrid aufpolymerisiertes Polypropylen (MAPP) oder mit Maleinsäureanhydrid aufpolymerisiertes Polyethylen (MAPE).

5. Verfahren zum Herstellen von oberflächenmodifizierter gebleichter chemischer Pulpfaser gemäss Anspruch 4, wobei die oberflächenmodifizierende Zusammensetzung eine wässrige, und vorzugsweise nichtionische Dispersion des mit Dicarbon-Alkensäure-Anhydrid aufpolymerisierten Polyolefins ist, welche vorzugsweise von zwischen 5 bis 10 Gewichtsprozent des mit Dicarbon-Alkensäure-Anhydrid aufpolymerisierten Polyolefins aufweist.

6. Verfahren zum Herstellen von oberflächenmodifizierter gebleichter chemischer Pulpfaser gemäss einem der Ansprüche 1 bis 3, wobei die oberflächenmodifizierende Zusammensetzung als die oberflächenmodifizierende Verbindung ein Silan gemäss Formel I (R₁)ₙSi(R₂)₄₋ₙ aufweist, oder daraus besteht, wobei R₁ eine Gruppe ist, welche fähig ist, eine Hydrolyse zu durchlaufen, wie beispielsweise ein C₁-C₁₀ Alkoxy, -OH, oder ein Halogen, wobei n eine ganze Zahl ist, ausgewählt aus 1, 2, oder 3, wobei R₂ unabhängig davon ein Wasserstoff, Methyl, Ethyl oder eine verzweigte oder lineare Alkyl- oder Alkenylkette sein kann, welche vorzugsweise 3 bis 10 Kohlenstoffe aufweist, welche substituiert oder nicht substituiert sein können; oder wobei die oberflächenmodifizierende Zusammensetzung als die oberflächenmodifizierende Verbindung ein Salt eines Silans gemäss Formel I (R₁)ₙSi(R₂)₄₋ₙ aufweist oder daraus besteht.

7. Verfahren zum Herstellen von oberflächenmodifizierter gebleichter chemischer Pulpfaser gemäss Anspruch 6, wobei die oberflächenmodifizierende Zusammensetzung eine Lösung aus einem Silan gemäss Formel I in einem Alkohol wie beispielsweise Methanol oder Ethanol ist; oder eine wässrige Lösung eines Salzes eines Silans gemäss Formel I, vorzugsweise eine wässrige Lösung eines Metallsalzes davon.

8. Verfahren zum Herstellen von oberflächenmodifizierter gebleichter chemischer Pulpfaser gemäss Anspruch 6 oder 7, wobei die oberflächenmodifizierende Zusammensetzung von 2 bis 50 Gewichtsprozent, und vorzugsweise von 20 bis 30 Gewichtsprozent des Silans gemäss Formel I aufweist.

9. Verfahren zum Herstellen von oberflächenmodifizierter gebleichter chemischer Pulpfaser gemäss einem der vorhergehenden Ansprüche, wobei die gebleichte chemische Pulpfaser in einem Wirbelbettreaktor verflüssigt wird.

10. Verfahren zum Herstellen von oberflächenmodifizierter gebleichter chemischer Pulpfaser gemäss einem der vorhergehenden Ansprüche, wobei die gebleichte chemische Pulpfaser in einer Mischvorrichtung verflüssigt wird.

11. Verfahren zum Herstellen von oberflächenmodifizierter gebleichter chemischer Pulpfaser gemäss einem der vorhergehenden Ansprüche, wobei die oberflächenmodifizierte gebleichte chemische Pulpfaser bis auf einen Wassergehalt von nicht mehr als etwa 5 Gewichtsprozent getrocknet wird.

12. Verfahren zum Herstellen eines Agglomeratmaterials, aufweisend eine oberflächenmodifizierte gebleichte chemische Pulpfaser, oder im Wesentlichen bestehend daraus, beinhaltend ein Herstellen einer oberflächenmodifizierten gebleichten chemischen Pulpfaser gemäss einem der vorhergehenden Ansprüche, ein Benetzen der oberflächenmodifizierten gebleichten chemischen Pulpfaser mit einer Bindemittelflüssigkeit, und Agglomerieren der benetzten oberflächenmodifizierten gebleichten chemischen Pulpfaser zu einem Agglomerat aufweisend oberflächenmodifizierte gebleichte chemische Pulpfaser oder im Wesentlichen bestehend daraus, wobei die besagten Agglomerate vorzugsweise eine Rohdichte von mehr als 80 g/dm³ aufweisen.

13. Verfahren zum Herstellen eines Agglomeratmaterials gemäss Anspruch 12, aufweisend oberflächenmodifizierte gebleichte chemische Pulpfaser oder im Wesentlichen bestehend daraus, wobei die Bindemittelflüssigkeit Wasser ist und/oder wobei das Agglomeratmaterial, welches oberflächenmodifizierte gebleichte chemische Pulpfaser aufweist oder im Wesentlichen daraus besteht, bis auf einen Wassergehalt von nicht mehr als 5 Gewichtsprozent getrocknet wird.

14. Verfahren zum Herstellen eines Agglomeratmaterials gemäss Anspruch 12 oder 13, welches oberflächenmodifizierte gebleichte chemische Pulpfaser aufweist oder im Wesentlichen daraus besteht, wobei das Agglomeratmaterial, welches oberflächenmodifizierte gebleichte chemische Pulpfaser aufweist oder im Wesentlichen daraus besteht, im Wesentlichen frei ist von thermoplastischem Polymer, insbesondere im Wesentlichen frei von nicht-aufpolymerisiertem thermoplastischem Polyolefin wie Polypropylen oder Polyethylen.

## Revendications

1. Un procédé de production de fibres de pâte à papier chimique blanchies modifiées en surface, comprenant la fluidisation de fibres de pâte à papier chimique blanchie et la mise en contact des fibres de pâte à papier chimique blanchie fluidisée avec un aérosol d'une composition de modification de surface comprenant un composé de modification de surface.

2. Le procédé de production de fibres de pâte à papier chimique blanchies modifiées en surface selon la revendication 1, dans lequel l'aérosol comprend des particules liquides de composition de modification de surface ayant de préférence un diamètre moyen de 1 à 450 µm.

3. Le procédé de production de fibres de pâte à papier chimique blanchies modifiées en surface selon la revendication 1 ou 2, dans lequel les fibres de pâte à papier chimique blanchie sont modifiées avec une quantité de 0,1 à 10 % en poids de composé de modification de surface par rapport au poids des fibres de pâte à papier chimique blanchie.

4. Le procédé de production de fibres de pâte à papier chimique blanchies modifiées en surface selon les revendications 1 à 3, dans lequel la composition de modification de surface comprend une polyoléfine greffée avec de l'anhydride d'acide alcénoïque dicarboxylique comme composé de modification de surface, telle que du polypropylène greffé à l'anhydride d'acide maléique (MAPP) ou du polyéthylène greffé à l'anhydride d'acide maléique (MAPE).

5. Le procédé de production de fibres de pâte à papier chimique blanchies modifiées en surface selon la revendication 4, dans lequel la composition de modification de surface est une dispersion aqueuse, et de préférence non ionique, de la polyoléfine greffée avec de l'anhydride d'acide alcénoïque dicarboxylique, comprenant de préférence de 5 à 10 % en poids de polyoléfine greffée avec de l'anhydride d'acide alcénoïque dicarboxylique.

6. Le procédé de production de fibres de pâte à papier chimique blanchies modifiées en surface selon les revendications 1 à 3, dans lequel la composition de modification de surface comprend, ou est constituée d'un silane selon la formule I (R₁)ₙSi(R₂)₄₋ₙ comme composé de modification de surface, où R₁ est un groupe capable de subir une hydrolyse telle que un alcoxy en C₁-C₁₀, -OH ou un halogène, où n est un nombre entier choisi parmi 1, 2 ou 3, où R₂ peut être indépendamment un hydrogène, un méthyle, un éthyle ou une chaîne alkyle ou alcényle ramifiée ou linéaire ayant de préférence 3 à 10 carbones pouvant être substitués ou non ; ou dans lequel la composition de modification de surface comprend, ou est constituée d'un sel d'un silane selon la formule I (R₁)ₙSi(R₂)₄₋ₙ, en tant que composé de modification de surface.

7. Le procédé de production de fibres de pâte à papier chimique blanchies modifiées en surface selon la revendication 6, dans lequel la composition de modification de surface est une solution d'un silane selon la formule I dans un alcool tel que le méthanol ou l'éthanol ; ou une solution aqueuse d'un sel d'un silane selon la formule I, de préférence une solution aqueuse d'un sel métallique de celui-ci.

8. Le procédé de production de fibres de pâte à papier chimique blanchies modifiées en surface selon la revendication 6 ou 7, dans lequel la composition de modification de surface comprend de 2 à 50 % en poids, et de préférence de 20 à 30 % en poids, du silane selon la formule I.

9. Le procédé de production de fibres de pâte à papier chimique blanchies modifiées en surface selon l'une quelconque des revendications précédentes, dans lequel les fibres de pâte à papier chimique blanchie sont fluidisées dans un réacteur à lit fluidisé.

10. Le procédé de production de fibres de pâte à papier chimique blanchies modifiées en surface selon l'une quelconque des revendications précédentes, dans lequel les fibres de pâte à papier chimique blanchie sont fluidisées dans un dispositif mixeur.

11. Le procédé de production de fibres de pâte à papier chimique blanchies modifiées en surface selon l'une quelconque des revendications précédentes, dans lequel les fibres de pâte à papier chimique blanchie modifiées en surface sont séchées jusqu'à une teneur en eau ne dépassant pas environ 5 % en poids.

12. Le procédé pour produire un matériau aggloméré comprenant ou constitué essentiellement de fibres de pâte à papier chimique blanchies modifiées en surface, comprenant la production de fibres de pâte à papier chimique blanchie modifiée en surface selon l'une quelconque des revendications précédentes, le mouillage des fibres de pâte à papier chimique blanchie modifiée en surface avec un liquide liant, et l'agglomération des fibres de pâte à papier chimique blanchie modifiée en surface humide en un agglomérat comprenant ou essentiellement constitué de fibres de pâte à papier chimique blanchie modifiée en surface, lesdits agglomérats ayant de préférence une densité apparente supérieure à 80 g/dm³.

13. Le procédé de production d'un matériau aggloméré selon la revendication 12, comprenant ou essentiellement étant constitué de fibres de pâte à papier chimique blanchies modifiées en surface, dans lequel le liquide liant est de l'eau et/ou dans lequel le matériau aggloméré comprenant ou essentiellement étant constitué de fibres de pâte à papier chimique blanchies modifiées en surface est séché pour une teneur en eau ne dépassant pas 5 % en poids.

14. Le procédé de production d'un matériau aggloméré selon la revendication 12 ou 13, comprenant ou essentiellement étant constitué de fibres de pâte à papier chimique blanchies modifiées en surface, où le matériau aggloméré comprenant ou essentiellement étant constitué de fibres de pâte à papier chimique blanchies modifiées en surface est essentiellement exempt de polymère thermoplastique, en particulier essentiellement exempt de polyoléfine thermoplastique non greffée telle que le polypropylène ou polyéthylène.
